# EUROPÄISCHE PATENTSCHRIFT

(11) **EP 3 807 017 B1**
(45) Veröffentlichungstag und Bekanntmachung des Hinweises auf die Patenterteilung: **04.05.2022**
(21) Anmeldenummer: 19731595.5
(22) Anmeldetag: 23.05.2019
(51) Int. Cl.: B06B 1/06, G01S 15/42, G01S 7/521, G10K 11/34, G10K 11/22, G01N 29/34, G01N 29/28, G01N 29/26, G01N 29/24, G01S 15/88

(54) **1D-ULTRASCHALLWANDLER-EINHEIT FÜR DIE BEREICHSÜBERWACHUNG**
1D ULTRASONIC TRANSDUCER UNIT FOR AREA MONITORING
UNITÉ TRANSDUCTEUR ULTRASONORE 1D POUR LA SURVEILLANCE DE ZONES

(30) Priorität: 03.08.2018 DE 102018006139
(43) Veröffentlichungstag der Anmeldung: 21.04.2021
(73) Patentinhaber: Pepperl+Fuchs SE, 68307 Mannheim (DE)
(72) Erfinder: AUGENSTEIN, Regine, 68167 Mannheim (DE); KAINDL, Thomas, 69221 Dossenheim (DE)
(74) Vertreter: Koch Müller Patentanwaltsgesellschaft mbH
(86) Internationale Anmeldenummer: PCT/EP2019/000164
(87) Internationale Veröffentlichungsnummer: WO 2020/025157

(56) Entgegenhaltungen:
- EP-A2- 0 940 801
- KONETZKE ERIC ET AL: "Phased array transducer for emitting 40-kHz air-coupled ultrasound without grating lobes", 2015 IEEE INTERNATIONAL ULTRASONICS SYMPOSIUM (IUS), IEEE, 21. Oktober 2015 (2015-10-21), Seiten 1-4, XP032799399, DOI: 10.1109/ULTSYM.2015.0019 [gefunden am 2015-11-13]
- TAKAYUKI TAKAHASHI ET AL: "Ultrasonic phased array sensor for electric travel aids for visually impaired people", PROCEEDINGS OF THE SPIE - THE INTERNATIONAL SOCIETY FOR OPTICAL ENGINEERING SPIE - VERTICAL-CAVITY SURFACE-EMITTING LASERS XIII, Bd. 6794, 3. Dezember 2007 (2007-12-03), Seite 67943V, XP055619716, SPIE OPTO: INTEGRATED OPTOELECTRONIC DEVICES24-29 January 2009San Jose, California, United States ISSN: 0277-786X, DOI: 10.1117/12.783988
- JAGER AXEL ET AL: "Air-coupled 40-KHZ ultrasonic 2D-phased array based on a 3D-printed waveguide structure", 2017 IEEE INTERNATIONAL ULTRASONICS SYMPOSIUM (IUS), IEEE, 6. September 2017 (2017-09-06), Seiten 1-4, XP033245009, DOI: 10.1109/ULTSYM.2017.8091892 [gefunden am 2017-10-31]
- Manufacturing Murata: "Ultrasonic Sensor Application Manual Cat. No. S15E-5", , 1. Januar 2009 (2009-01-01), XP055620003, Internet Gefunden im Internet: URL:https://cdn-reichelt.de/documents/date nblatt/B400/ULTRASCHALL%20SENSOR.pdf [gefunden am 2019-09-09]

## Beschreibung

Die Erfindung betrifft eine1D-Ultraschallwandler-Einheit für die Bereichsüberwachung mit mindestens drei diskreten und einzeln ansteuerbaren Ultraschallwandlern zur Erfassung von Objekten, Konturen oder Abständen. Ultraschall bzw. Ultraschallwandler werden in den unterschiedlichsten Messanordnungen verwendet. Je nach Anwendung wird der Ultraschall in ein flüssiges oder gasförmiges Medium ausgekoppelt.

Aus der WO 2008/135 004 A1 ist ein Ultraschallwandler-Array für die Anwendung in gasförmigen Medien bekannt. Das Array weist einen Schichtaufbau aus einer Schicht aus einem Elektret zwischen zwei Elektrodenstrukturen auf, wobei die eine Elektrodenstruktur mehrere unabhängig adressierbare Elektrodenelemente umfasst, wodurch lokale Dickenschwingungen der Elektretschicht erzeugt werden.

Ein 1,5D Array von Ultraschallwandlern mit verbesserter Nahfeldauflösung ist aus der US 2013/0283918 A1 bekannt. In der US 2014/0283611 A1 und der US 6,310,831 B1 sind phasengesteuerte Ultraschallwandler-Arrays und adaptive bzw. kompensierende Steuerungsverfahren beschrieben.

Weitere Ultraschallwandler sind aus der EP 0 940 801 A2 sowie aus "Phased array transducer for emitting 40 kHz air-coupled ultrasound without grating lobes", Eric Konetzke et al., IEEE International Ultrasonic Symposium, 2015, S. 1-4 und aus "Air-coupled 40-kHz ultrasonic 2D-phased array based on a 3D-printed waveguide structure", Jäger et al., IEEE International Ultrasonic Symposium, 2017, S. 1-4, und aus "Takahashi et al., Ultrasonic phased array sensor for electrical travel aids for visually impaired people, Proceedings of the spie -The international society for optical engineering spie - vertical-cavity surface-emitting lasers XIII, Bd. 6794, 3. Dezember 2007, Seite 67943V, ISSN: 0277-786X" und aus " "Manufactoring Murata: Ultrasonic Sensor Application Manual Cat. No. S15E-5, 1. Januar 2009, URL:https://cdn-reichelt.de/ documents/ datenblatt/8400/ultraschall%20sensor.pdf, Seite 3" bekannt.

Für den Einsatz in einer industriellen Umgebung müssen die eingesetzten Ultraschallwandler eine Temperaturstabilität der Messung von -40°C bis teilweise über +100°C und eine elektromagnetische Verträglichkeit mit anderen technischen Geräten gewährleisten können. Außerdem müssen die Ultraschallwandler gegenüber harschen Umwelteinflüssen, wie z.B. Staub, Nässe, aggressiven Chemikalien, sowie gegenüber mechanischen Schlägen oder gegenüber mechanischem Kratzen robust sein.

Um hohe Detektionsreichweiten zu erzielen, werden piezoelektrische Keramiken, wie z.B. Blei-Zirkonat-Titanat (PZT) eingesetzt, die im Vergleich zu anderen piezoelektrischen Materialien, wie Quarz, Elektrete oder PVFD, hohe Kopplungsfaktoren besitzen. Der Kopplungsfaktor stellt dabei ein Maß für die Umwandlungseffizienz zwischen mechanisch und elektrischer gespeicherter Energie dar. Diese liegen für PZT je nach Anregungsrichtung beispielhaft im Bereich von 0,3 bis ca. 0,75.

Je nach Polarisationsrichtung des piezoelektrischen Materials können mit Hilfe von Wechselspannungen resonante mechanische Schwingungen im piezoelektrischen Körper erzeugt werden, die je nach geometrischer Ausbreitung als Planar-, Dicken- oder Scheerschwingung bezeichnet werden. Für diese Schwingungsformen lassen sich aus der materialspezifischen Frequenzkonstanten typische Abmessungen des piezoelektrischen Körpers abschätzen, die für eine resonante Schwingung bei einer vorgegebenen Frequenz notwendig sind. Diese Frequenzkonstanten liegen für PZT je nach Schwingungsart typischerweise zwischen 1300 kHz^{∗}mm bis 2600 kHz^{∗}mm.

Eine dünne Scheibe aus für Sensorik geeignetem PZT besitzt demnach für Anregungsfrequenzen von 20 kHz bis 500 kHz im Planarmodus einen Durchmesser von ca. 4 mm bis 100 mm. Aufgrund der kapazitativen Eigenschaften einer solchen dünnen Scheibe lassen sich bei entsprechender Polarisation niedrige Anregungsspannungen gut umsetzen.

Größere Dicken der piezoscheibe sind nicht erstrebenswert. Einerseits müssen mit zunehmender Dicke des piezoelektrischen Materials für denselben Frequenzbereich höhere Spannungen, schnell auch im kV-Bereich, aufgebracht werden, was einen höheren Sicherheitsaufwand bedeutet. Andererseits verändert sich mit der Dicke des piezoelektrischen Körpers auch dessen Steifigkeit, was direkte Auswirkungen auf den Empfangsfall von Schallwellen hat.

Bei einer Anwendung von mehreren Ultraschallwandlern in eine phasengesteuerten mindestens eindimensionalen Array (phased array) ist weiterhin zu beachten, dass die Abstände zwischen benachbarten Ultraschallwandlern nicht größer als die Wellenlänge der Ultraschallwelle oder bevorzugt nicht größer als die halbe Wellenlänge sein dürfen.

Durch diese Abstandsbedingung wird entsprechend die Baugröße der einzelnen Wandler bzw. die mit einer bestimmten Bauform/Größe der Ultraschallwandler möglichen Frequenzbereiche beschränkt.

Für einen Frequenzbereich zwischen 20 kHz und 500 kHz und eine Auskopplung In Luft ergib sich beispielsweise ein maximaler Abstände zwischen benachbarten Wandlern in der Größenordnung von ca. 8,5 mm bis ca. 0,3 mm. Der vorher beschriebene Wandler mit einer dünnen Scheibe aus für Sensorik geeignetem PZT weist jedoch schon aufgrund des Piezoscheibendurchmessers eine im Schnitt um mehr als 10 Mal größeren Durchmesser auf.

Vor diesem Hintergrund besteht die Aufgabe der Erfindung darin, eine Vorrichtung anzugeben, die den Stand der Technik weiterbildet.

Die Aufgabe wird durch eine 1D-Ultraschallwandler-Einheit für die Bereichsüberwachung mit den Merkmalen des Patentanspruchs 1 gelöst. Vorteilhafte Ausgestaltungen der Erfindung sind Gegenstand von Unteransprüchen.

Gemäß dem Gegenstand der Erfindung wird eine 1D-Ultraschallwandler-Einheit für die Bereichsüberwachung bereitgestellt, umfassend ein Gehäuse, mindestens drei Ultraschallwandler und eine Steuereinheit, wobei die Steuereinheit dazu ausgelegt ist, jeden Ultraschallwandler einzeln anzusteuern, das Gehäuse Befestigungsmittel zur Befestigung an einer Oberfläche aufweist, die Steuereinheit zumindest teilweise in dem Gehäuse angeordnet ist, das Gehäuse eine Kommunikationsschnittstelle aufweist, jeder Ultraschallwandler jeweils ein Wandlergehäuse, einen in dem Wandlergehäuse angeordneten piezoelektrischen Körper und eine an einem offenen Ende des Wandlergehäuses angeordnete Schallauskoppelschicht zum Auskoppeln in ein gasförmiges Medium aufweist und an einer festen Position In dem Gehäuse angeordnet ist, jeder Ultraschallwandler dazu ausgelegt ist, eine Schallwelle mit einer übereinstimmenden Arbeitsfrequenz abzustrahlen und/oder zu empfangen und die Arbeitsfrequenz der Schallwellen in einem Bereich von 20 kHz bis 400 kHz liegt.

Jeweils zwei zueinander unmittelbar benachbarte Ultraschallwandler weisen in dem Gehäuse einen Abstand von Mitte der Schallauskoppelschicht zu Mitte der Schallauskoppelschicht von höchstens 10 cm oder höchstens 5 cm oder höchstens 2 cm auf. Die 1D-Ultraschallwandler-Einheit weist pro Ultraschallwandler einen Schallkanal auf, wobei jeder Schallkanal eine Eingangsöffnung und eine Ausgangsöffnung aufweist, jeder Schallauskoppelschicht genau eine der Eingangsöffnungen zugeordnet ist, die Ausgangsöffnungen entlang einer Geraden angeordnet sind, die Ausgangsöffnungen jeweils in einer Wand des Gehäuses angeordnet sind oder die Schallkanäle die Wand des Gehäuses durchdringen. Ein Abstand von der Mitte einer der Ausgangsöffnung zu der Mitte einer unmittelbar benachbarten Ausgangsöffnung entspricht höchstens der Wellenlänge im gasförmigen Medium oder höchstens der Hälfte der Wellenlänge im gasförmigen Medium, wobei der Abstand zwischen zwei unmittelbar benachbarten Ausgangsöffnungen jeweils kleiner als der Abstand der den entsprechenden Eingangsöffnungen zugeordneten Ultraschallwandlern ist, ein Quotient aus einem Flächeninhalt der Ausgangsöffnung zu einem Flächeninhalt der Eingangsöffnung einen Wert zwischen 0,30 und 1,2 aufweist und jeder Schallkanal mindestens eine dem Durchmessers der Eingangsöffnung entsprechende Länge besitzt.

Es versteht sich, dass es sich bei den Ultraschallwandlern der 1D-Ultraschallwandler-Einheit um einzelnen diskrete Bauteile handelt, wobei jeder Ultraschallwandler In dem Gehäuse angeordnet und mit dem Gehäuse verbunden ist und damit feste Abstände zu allen weiteren Ultraschallwandlern aufweist. Dabei sind zwei nebeneinander angeordnete Ultraschallwandler, zwischen denen kein weiterer Ultraschallwandler angeordnet ist, zueinander unmittelbar benachbarte.

Es versteht sich auch, dass die einzelnen Schallkanäle rohrartig oder stangenförmig ausgebildet sind, wobei sich beispielsweise der Rohrdurchmesser verringert und/oder die Form der Querschnittsfläche verändert und/oder der Verlauf des Kanals bogenförmig ausgebildet ist. Vorteilhafterweise weisen die Schallkanäle über ihre gesamte Länge von der Schallauskopplungsschicht bis zu ihrer Ausgangsöffnung keine Kante auf.

Die Schallkanäle führen die von den einzelnen Ultraschallwandlern erzeugten Schallwellen aus dem Gehäuse heraus bzw. reflektierte Schallwellen zu den Ultraschallwandlern zurück. So entsteht an den Ausgangsöffnungen an der Gehäusewand oder außerhalb des Gehäuses durch Überlagerung eine Wellenfront.

Mit den mehreren einzeln ansteuerbaren Ultraschallwandlern lassen sich durch zeitlich versetzte bzw. Phasen-versetzte Ansteuerung Wellenfronten mit einstellbarer Hauptausbreitungsrichtung erzeugen. Hierdurch ist es möglich zumindest in einer Dimension einen größeren Messbereich mit nur einer 1D-Ultraschallwandler-Einheit zu erfassen. Außerdem kann zusätzlich die Struktur der Oberfläche eines Objekts und/oder die Form eines Objekts erfasst werden. So kann beispielsweise die Art eines Objekts bestimmt werden.

Durch Anordnen von Schallkanälen vor den einzelnen Ultraschallwandlern werden die einzelnen Schallquellen bei Überlagerung bzw. für das Überlagern zu einer gemeinsamen Wellenfront an die jeweiligen Enden bzw. die Ausgangsöffnungen der Schallkanäle verlegt. Dies ermöglicht es, die Abstände zwischen den einzelnen Schallquellen unabhängig von der Größe, z.B. dem Durchmesser, der einzelnen Ultraschallwandler bzw. unabhängig von den Abständen zwischen den einzelnen Ultraschallwandlern einzustellen. Insbesondere ist es möglich, die Abstände zwischen den Schallquellen im Vergleich zu den Abständen zwischen den einzelnen Wandlern zu verringern.

Bei einem Gehäusedurchmesser der einzelnen Ultraschallwandler von beispielsweise 7 mm beträgt der Abstand zweier Wandler mindestens 14 mm. Entsprechend sind ohne Schallkanal nur Wellenfronten mit Frequenzen bis höchstens 22 kHz (λ ≥ 14mm) bzw. bis höchstens 11 kHz (λ/2 ≥ 14mm) realisierbar. Das Erzeugen von Wellenfronten mit höheren Frequenzen, also kleineren Wellenlängen, ist mit denselben Ultraschallwandlern erst mit Hilfe der erfindungsgemäßen Schallkanäle möglich, da der Abstand der einzelnen "Schallquellen" bei der Überlagerung nicht durch die Größe der Wandlergehäuse, sondern nur noch durch die Größe und den Abstand der Schallkanalausgangsöffnungen bestimmt wird.

Durch die Schallkanäle wird außerdem eine präzise, gerichtete Detektion sichergestellt.

Die abstrahlende Apertur der piezoelektrischen Wandlers, z.B. eine kreisförmige Apertur mit einem durch den piezoelektrischen Körper vorgegebenen Durchmesser, wird mittels der Schallkanäle so verändert, dass sie in mindestens einer Dimension den Bedingungen einer gewünschten Array-Anordnung genügen. Dies ermöglicht den Einsatz robuster, zuverlässiger und/oder kostengünstiger diskreter Ultraschallwandler in einer phased-array Anordnung. Die phased-array Anordnung ermöglicht einen großen Blickwinkel mit nur einer einzigen 1D-Ultraschallwandler-Einheit und damit eine zuverlässige Überwachung beispielsweise von Füllständen. Auch das Erkennen von Oberflächenstrukturen und/oder Objekten bzw. Objektformen ist möglich.

Es ist nicht nötig besonders kleine, beispielsweise integrierte Ultraschallwandler wie MEMS einzusetzen. Ebenso wenig ist es nötig mehrere Wandler-Einheiten anzubringen, auszulesen und gegebenenfalls aufeinander abzustimmen.

Gemäß der Erfindung weist das Gehäuse eine bewegliche Abdeckvorrichtung auf, wobei die Abdeckvorrichtung dazu ausgelegt ist, die Ausgangsöffnungen aller Schallkanäle zu verschließen. Mittels der Abdeckvorrichtung können die Schallkanäle verschlossen werden, solange die 1D-Ultraschallwandler-Einheit nicht gebraucht wird, wodurch das Eindringen von Fremdkörpern/Verunreinigungen verhindert werden kann. Zum Öffnen und Schließen der Schallkanäle bzw. zum Bewegen der Abdeckvorrichtung umfasst die 1D-Ultraschallwandler-Einheit beispielsweise ein Stellmittel.

Gemäß einer Weiterbildung weist der Quotient zwischen dem Flächeninhalt der zweiten Querschnittsfläche und dem Flächeninhalt der ersten Querschnittsfläche einen Wert zwischen 0,5 und 1,5 oder zwischen 0,9 und 1,1 auf. Der Flächeninhalt der Eingangsfläche kann erfindungsgemäß vergrößert, verkleinert oder erhalten bleiben, wobei gleichzeitig eine Verringerung zumindest der Breite der Ausgangsöffnung im Vergleich zu der Eingangsöffnung erreicht wird.

Gemäß einer weiteren Ausführungsform besitzt jeder Schallkanal eine Länge von der Schallauskoppelschicht jedes Ultraschallwandlers zu der Ausgangsöffnung des zugeordneten Schallkanals, wobei die Länge ein ganzzahliges Vielfaches eines Achtels der Wellenlänge der Schallfrequenz oder ein ganzzahliges Vielfachen der halben Wellenlänge der Schallfrequenz beträgt.

Gemäß der Erfindung liegen die Ausgangsöffnungen aller Schallkanäle in einer gemeinsamen planen Ebene oder in einer gekrümmten Fläche. Durch Anordnen in einer gekrümmten Fläche, z.B. einer konkaven Fläche, lassen sich beispielsweise fokussierte Wellenfronten erzeugen.

In einer anderen Ausführungsform besteht jeder Schallkanal aus einem Metall oder einem Kunststoff. Alternativ umfasst jeder Schallkanal ein Metall oder einen Kunststoff.

Gemäß einer weiteren Ausführungsform weist jeder Ultraschallwandler zwischen der Schallauskoppelschicht und dem Wandlergehäuse eine Schallentkopplungsschicht auf.

In einer anderen Ausführungsform ist die Steuereinheit vollständig oder teilweise in dem Gehäuse angeordnet.

Gemäß einer anderen Ausführungsform ist das Gehäuse der 1D-Ultraschallwandler-Einheit mindestens der IP 40 Schutzart entsprechend ausgebildet.

In einer weiteren Weiterbildung weist das Gehäuse mindestens eine Signalschnittstelle zur Übermittlung eines Messsignals und/oder eines Steuersignals auf. Der Signalausgang ist beispielsweise als Kommunikationsschnittstelle ausgebildet, um mit einer externen Steuereinheit mittels eines Bus-Systems bzw. Protokolls zu kommunizieren. Ebenso kann die Signalschnittstelle eine drahtlose Datenübertragung beispielsweise mittels Bluetooth bereitstellen.

Gemäß einer anderen Ausführungsform ragt jeder Ultraschallwandler mit der Schallauskoppelschicht voran in die zugeordnete Eingangsöffnung hinein, wobei in einer Weiterbildung jeder Schallkanal zumindest einen Teil des zugeordneten Ultraschallwandlers passgenau aufnimmt. Anders ausgedrückt entspricht eine innere Form der Schallkanäle im Bereich der Eingangsöffnung gemäß dieser Ausführungsform möglichst genau einer äußeren Form des jeweiligen Ultraschallwandlers.

In einer weiteren Ausführungsform weist das Gehäuse jedes Ultraschallwandlers einen Durchmesser von mindestens 7 mm auf. Das Gehäuse jedes Ultraschallwandlers ist beispielsweise als ein zylinderförmiger Metallbecher ausgebildet. Gemäß einer Weiterbildung dieser Ausführungsform spannt eine Oberfläche der Schallauskoppelschicht, ein Rand des Metallbechers und beispielsweise eine dazwischen angeordnete Schallentkopplungsschicht jedes einzelnen Ultraschallwandlers jeweils eine plane Ebene auf.

In einer anderen Ausführungsform weist jeder Ultraschallwandler eine auf einem Referenzpotential liegende elektromagnetische Abschirmung auf. Es versteht sich, dass die elektromagnetische Abschirmung auch vollständig oder zumindest teilweise durch das Gehäuse, insbesondere einen als Gehäuse dienenden Metallbecher ausgebildet sein kann. Alternativ kann die 1D-Ultraschallwandler-Einheit auch eine gemeinsame Abschirmung für alle Ultraschallwandler aufweisen, z.B. ein gemeinsames Gehäuse.

In einer weiteren Ausführungsform weist jeder Schallkanal eine Wandstärke von mindestens 0,5 mm oder mindestens 1 mm auf. Gemäß einer anderen Weiterbildung weisen jeweils zwei Schallkanäle zueinander über eine gesamte Länge der beiden Schallkanäle einen Abstand von mindestens 0,5 mm oder mindestens 1 mm auf.

Gemäß einer anderen Ausführungsform umfasst das Gehäuse eine plane Rückwand und eine parallel zu der Rückwand verlaufende vordere Wand. Hierdurch ist das Anbringen und Ausrichten der 1D-Ultrschallwandler-Einheit an Oberfläche besonders einfach und zuverlässig möglich. Die Ultraschallwandler sind bevorzugt an der Rückwand angebracht und die Schallkanäle enden bevorzugt an bzw. in der vorderen Wand. Besonders bevorzugt sind nicht nur die Ausgangsöffnungen der Schallkanäle, sondern auch die Ultraschallwandler sowie die Eingangsöffnungen der Schallkanäle entlang einer geraden angeordnet. Die durch die Eingänge der Schallkanäle aufgespannte Gerade ist beispielsweise deutlich länger als die durch die Ausgangsöffnungen aufgespannte Gerade.

Die Erfindung wird nachfolgend unter Bezugnahme auf die Zeichnungen näher erläutert. Hierbei werden gleichartige Teile mit identischen Bezugszeichen beschriftet. Die dargestellten Ausführungsformen sind stark schematisiert, d.h. die Abstände und die lateralen und die vertikalen Erstreckung sind nicht maßstäblich und weisen, sofern nicht anders angegeben, auch keine ableitbaren geometrischen Relationen zueinander auf. Darin zeigt:
- Figur 1A: eine Ansicht einer ersten erfindungsgemäßen Ausführungsform einer 1D-Ultraschallwandler-Einheit zur Bereichsüberwachung,
- Figur 1B: eine Ansicht einer zweiten erfindungsgemäßen Ausführungsform einer 1D-Ultraschallwandler-Einheit zur Bereichsüberwachung,
- Figur 2: eine Schnittansicht eines Beispiels eines Gehäuses einer 1D-Utraschallwandler-Einheit, Figur 3 eine Ansicht eines weiteren Beispiels der Schallkanäle,
- Figur 4: eine Ansicht einer erfindungsgemäßen Ausführungsform der Schallkanäle,
- Figur 5: eine Ansicht einer weiteren Ausführungsform eines einzelnen Schallkanals,
- Figur 6: eine schematische Ansicht verschiedener Ausführungsformen einer Ausgangsfläche eines Schallkanals.

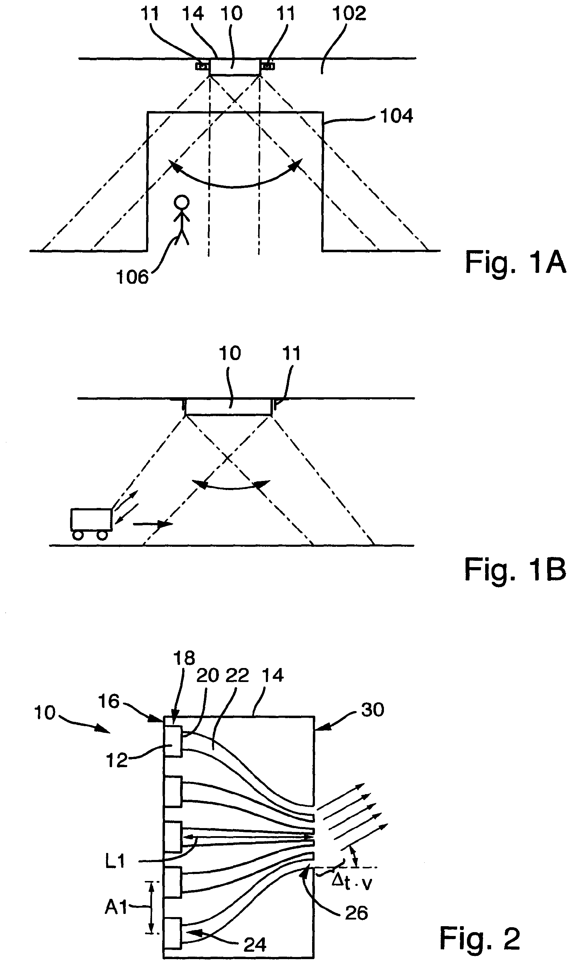

Die Abbildung der Figur 1A zeigt eine Ansicht einer ersten Ausführungsform einer erfindungsgemäßen 1D-Ultraschallwandler-Einheit 10 zur Bereichsüberwachung. Die 1D-Ultraschallwandler-Einheit weist ein Gehäuse 14 auf, welches mit Befestigungsmitteln 11 an einer Wand 102 oberhalb eines Durchgangs 104 angebracht ist. Durch die 1D-Ultraschallwandler-Einheit 10 werden Schallwellen 11 erzeugt. Die Schallwellen 11 weisen eine Hauptausbreitungsrichtung auf, wobei die Hauptausbreitungsrichtung in der Bildebene schwenkbar ist (gestrichelte Linie, gepunktete Linie oder strichpunktierte Linie), wodurch der gesamte Bereich des Durchgangs 104 zuverlässig überwacht werden kann. Objekte 106, z.B. Personen und/oder ein Boden und/oder eine Seitenwand des Durchgangs 104 reflektieren die Schallwellen 11. Mittels der 1D-Ultraschallwandler-Einheit 10 kann der komplette Bereich des Durchgangs 104 zuverlässig kontrolliert. Den Durchgang 104 durchquerende Objekte 106 können gegebenenfalls an ihrer Form erkannt werden.

In der Abbildung der Figur 1B ist eine zweite erfindungsgemäße Ausführungsform der 1D-Ultraschallwandler-Einheit 10 dargestellt. Die 1D-Ulterschallwandlereinheit 10 ist mit den Befestigungsmitteln 11 an einer Gebäudedecke 106 oberhalb angebracht, so dass mittels der Ultraschallwellen Objekte 110 innerhalb des durch das Schwenken erweiterten Erfassungsbereichs der Einheit 10 erfasst werden können. Auch die Form oder die Oberflächenstruktur der Objekten 110 ist mittels der Einheit 10 ermittelbar.

In der Abbildung der Figur 2 ist eine Schnittansicht eines Gehäuses 14 einer Ultraschallwandler-Einheit 10 dargestellt. In dem Gehäuse 14 sind entlang einer planen Rückwand 16 des Gehäuses 14 fünf diskrete Ultraschallwandler 12 angeordnet. Jeder Ultraschallwandler 12 weist ein eigenes Wandlergehäuse 18 und eine Schallauskoppelschicht 20 auf. Jeder Ultraschallwandler 12 weist zu dem oder den unmittelbar benachbarten Ultraschallwandlern 12 einen Abstand A1 von Mitte der Schallauskoppelschicht 20 zu Mitte der Schallauskoppelschicht 20 auf.

Jedem Ultraschallwandler 12 ist ein Schallkanal 22 zugeordnet, wobei jeder Schallkanal 22 eine Eingangsöffnung 24 und einen Ausgangsöffnung 26 aufweist. Die Eingangsöffnungen 24 sind jeweils so vor oder um einen der Ultraschallwandler 12 angeordnet, dass der jeweilige Ultraschallwandler 12 in den Schallkanal 22 hinein abstrahlt. Die Ausgangsöffnungen 26 der Schallkanäle 22 sind entlang einer der Rückwand gegenüberliegenden planen vorderen Wand 30 des Gehäuses 14 angeordnet bzw. durchdringen die vordere Wand 30.

Jeweils zwei benachbarte Ausgangsöffnungen 26 weisen einen Abstand A2 von Mitte der Ausgangsöffnung 26 zu Mitte der Ausgangsöffnung 26 auf. Erfindungsgemäß ist der Abstand A2 der Ausgangsöffnungen 26 jeweils kleiner oder gleich dem Abstand A1 der zugeordneten bzw. zugehörigen Ultraschallwandler 12.

Eine Länge L1 von jeder Schallauskoppelschicht 20 bis zu der Ausgangsöffnung 26 des zugehörigen Schallkanals 22 beträgt ein ganzzahliges Vielfachen eines Achtels der Wellenlänge der Schallfrequenz.

Eine nicht dargestellte Steuereinheit ist dazu ausgelegt, jeden Ultraschallwandler 12 einzeln anzusteuern. Durch zeitlich versetztes bzw. Phasenversetztes Ansteuern der einzelnen Ultraschallwandler 12 erzeugt die 1D-Ultraschallwandler-Einheit 10 ebene Ultraschallwellen mit einer Hauptausbreitungsrichtung (Pfeile), wobei die Hauptausbreitungsrichtung mittels des Phasenversatzes zwischen den aus den Ausgangsöffnungen 26 der einzelnen Schallkanäle austretenden Schallwellen einstellbar ist.

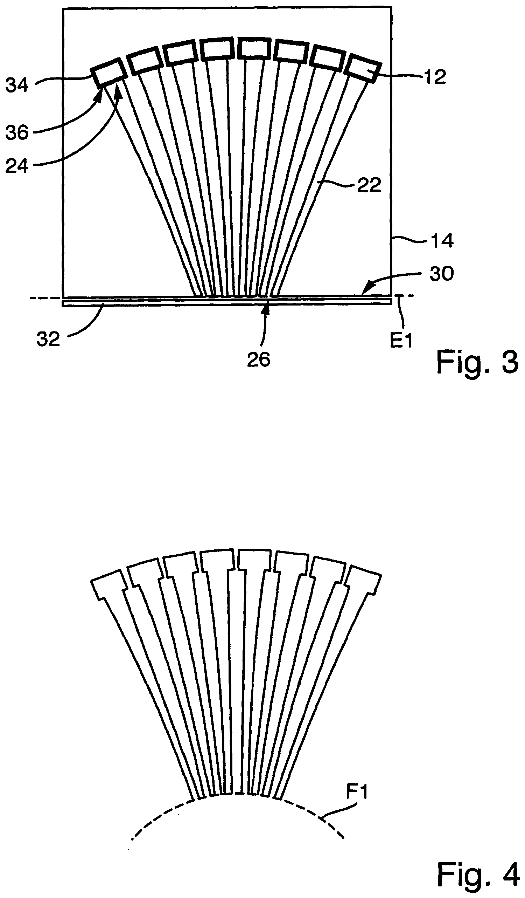

In dem in der Figur 3 dargestellten Beispiel verlaufen die Schallkanäle 22 so, dass die Ausgangsöffnungen 26 aller Schallkanäle 22 in einer gemeinsamen planen Ebene E1 liegen. Im dargestellten Beispiel verläuft die vordere Wand 30 des Gehäuses 14 der 1D-Ultraschallwandler-Einheit 10 innerhalb der Ebene E1. Ein sich noch vor der Eingangsöffnung 24 jedes Schallkanals 22 befindlicher Bereich 34 des jeweiligen Schallkanals 22 ist so ausgebildet, dass der jeweils zugeordnete Ultraschallwandler 12 passgenau in den Schallkanal 22 hinein passt. Hierfür weist jeder Schallkanal 22 in dem Bereich einen dem Außendurchmesser D1 entsprechenden Innendurchmesser und eine als Anschlag dienende Kante 36 auf.

Das Gehäuse 14 umfasst außerdem eine bewegliche Abdeckvorrichtung 32.

Die Abdeckvorrichtung 32 befindet sich in dem dargestellten Beispiel in einem geschlossenen Zustand. Die Abdeckvorrichtung ist hierfür vor der vorderen Wand 30 des Gehäuses 14 mit den Ausgangsöffnungen 26 angeordnet, so dass die Schallkanäle 22 verschlossen sind. In einem geöffneten Zustand befindet sich die Abdeckvorrichtung 32, beispielsweise durch Klappen oder Schieben, nicht mehr vor der vorderen Gehäusewand 30 und den Ausgangsöffnungen 26 und die Ausgangsöffnungen 26 liegen frei.

In dem in der Figur 4 dargestellten Ausführungsbeispiel liegen die Ausgangsöffnungen 40 aller Schallkanäle 36 in einer konkav gekrümmten Fläche F1.

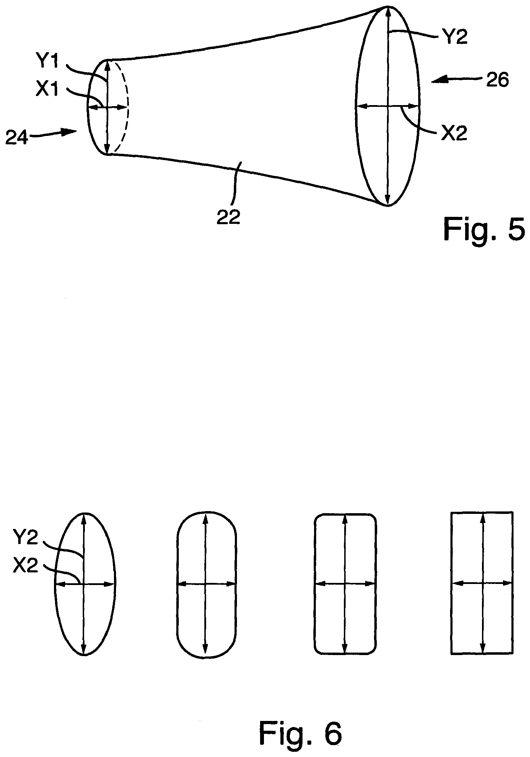

In der Abbildung der Figur 5 ist ein einzelner Schallkanal 22 schematisch dargestellt, wobei im Folgenden die Unterschiede gegenüber den Figuren 1 bis 4 erläutert werden.

Die Eingangsöffnung 24 weist eine Querschnittsfläche mit einer Breite x1 und einer Höhe y1 auf, die Ausgangsöffnung 26 eine Querschnittfläche mit einer Breite x2 und einer Höhe y2.

Die Eingangsöffnung 24 ist kreisförmig ausgebildet, d.h. die Breite ×1 und die Höhe y1 der Querschnittsfläche weisen denselben Wert auf. Die Ausgangsöffnung 26 hat dagegen eine ovale Form, so dass die Breite x2 der Querschnittsfläche kleiner als die Breite y2 ist.

Bevorzugt ist die Breite x2 der Ausgangsöffnung 26 kleiner als die Breite x1 der Eingangsöffnung 26. Die Höhe y2 der Ausgangsöffnung 26 ist dagegen bevorzugt größer als die Höhe y1 der Eingangsöffnung 24. Besonders bevorzugt gleicht der Höhenzuwachs des Schallkanals 22 die Abnahme der Breite des Schallkanals 22 so aus, dass der Flächeninhalt der Querschnittsfläche der Eingangsöffnung 24 dem Flächeninhalt der Querschnittsfläche der Ausgangsöffnung 26 entspricht.

Es versteht sich, dass die Breite x2 jeder Ausgangsöffnung 26 kleiner als die Wellenlänge der Schallfrequenz sein muss, um einen Abstand von der Mitte der Ausgangsöffnungen 26 zu der Mitte einer unmittelbar benachbarten Ausgangsöffnung 26 von höchstens der Wellenlänge der Schallfrequenz realisieren zu können.

In der Abbildung der Figur 6 sind mehrere erfindungsgemäße Ausführungsbeispiele der Querschnittsflächen der Ausgangsöffnungen 26 schematisch dargestellt. Damit der Flächeninhalt der Querschnittsfläche der Ausgangsöffnung 26 dem Flächeninhalt der Querschnittsfläche der Eingangsöffnung 24 entspricht eignen sich insbesondere Formen die ein Verhältnis von Breite x2 zu Höhe y2 von ungefähr 1.5 aufweisen.

## Patentansprüche

1. 1D-Ultraschallwandler-Einheit (10) für die Bereichsüberwachung, umfassend ein Gehäuse (14), mindestens drei Ultraschallwandler (12) und eine Steuereinheit, wobei
- die Steuereinheit dazu ausgelegt ist, jeden Ultraschallwandler (12) einzeln anzusteuern,
- das Gehäuse eine Kommunikationsschnittstelle aufweist,
- jeder Ultraschallwandler (12) jeweils ein Wandlergehäuse (18), einen in dem Wandlergehäuse (18) angeordneten piezoelektrischen Körper (18) und eine an einem offenen Ende des Wandlergehäuses (18) angeordnete Schallauskoppelschicht (20) zum Auskoppeln in ein gasförmiges Medium aufweist und an einer festen Position in dem Gehäuse (14) angeordnet ist,
- jeder Ultraschallwandler (12) dazu ausgelegt ist, eine Schallwelle mit einer übereinstimmenden Arbeitsfrequenz abzustrahlen und/oder zu empfangen,
- die Arbeitsfrequenz der Schallwellen in einem Bereich von 20 kHz bis 400 kHz liegt,
- jeweils zwei zueinander unmittelbar benachbarte Ultraschallwandler (12) in dem Gehäuse (14) einen Abstand (A1) von Mitte der Schallauskoppelschicht (20) zu Mitte der Schallauskoppelschicht (20) von höchstens 10 cm oder höchstens 5 cm oder höchstens 2 cm aufweisen,
- die 1D-Ultraschallwandler-Einheit (10) pro Ultraschallwandler (12) einen Schallkanal (22) aufweist,
- jeder Schallkanal (22) eine Eingangsöffnung (24) und eine Ausgangsöffnung (26) aufweist,
- jeder Schallauskoppelschicht (20) genau eine der Eingangsöffnungen (24) zugeordnet ist,
- die Ausgangsöffnungen entlang einer Geraden angeordnet sind,
- die Ausgangsöffnungen jeweils in einer Wand des Gehäuses angeordnet sind oder die Schallkanäle die Wand des Gehäuses durchdringen,
- ein Abstand (A2) von der Mitte einer der Ausgangsöffnung (26) zu der Mitte einer unmittelbar benachbarten Ausgangsöffnung (26) höchstens der Wellenlänge im gasförmigen Medium oder höchstens der Hälfte der Wellenlänge im gasförmigen Medium entspricht,
- wobei der Abstand (A2) zwischen zwei unmittelbar benachbarten Ausgangsöffnungen (26) jeweils kleiner als der Abstand (A1) zwischen den entsprechenden Eingangsöffnungen (24) zugeordneten Ultraschallwandlern (12) ist,
- ein Quotient aus einem Flächeninhalt der Ausgangsöffnung (26) zu einem Flächeninhalt der Eingangsöffnung (24) einen Wert zwischen 0,30 und 1,2 aufweist und
- jeder Schallkanal (22) mindestens eine dem Durchmessers der Eingangsöffnung (24) entsprechende Länge besitzt,
**dadurch gekennzeichnet, dass**
- das Gehäuse (14) Befestigungsmittel (11) zur Befestigung an einer Oberfläche aufweist,
- die Steuereinheit zumindest teilweise in dem Gehäuse (14) angeordnet ist,
- das Gehäuse eine bewegliche Abdeckvorrichtung (32) aufweist, wobei die Abdeckvorrichtung (32) dazu ausgelegt ist, die Ausgangsöffnungen (26) aller Schallkanäle (22) zu verschließen,
- die Ausgangsöffnungen (26) aller Schallkanäle (36) in einer gekrümmten Fläche (F1) liegen.

2. 1D-Ultraschallwandler-Einheit (10) nach Anspruch 1, **dadurch gekennzeichnet, dass** der Quotient des Flächeninhalts der Ausgangsöffnung (26) zu dem Flächeninhalt der Eingangsöffnung (24) einen Wert zwischen 0,5 und 1,5 oder zwischen 0,9 und 1,1 aufweist.

3. 1D-Ultraschallwandler-Einheit (10) nach einem der Ansprüche 1 oder 2, **dadurch gekennzeichnet, dass** jeder Schallkanal (22) eine Länge (L1) von der Schallauskoppelschicht (20) jedes Ultraschallwandlers (12) zu der Ausgangsöffnung (26) des zugeordneten Schallkanals (22) besitzt und die Länge (L1) ein ganzzahliges Vielfaches eines Achtels der Wellenlänge der Schallfrequenz oder ein ganzzahliges Vielfachen der halben Wellenlänge der Schallfrequenz beträgt.

4. 1D-Ultraschallwandler-Einheit (10) nach einem der Ansprüche 1 bis 3, **dadurch gekennzeichnet, dass** jeder Schallkanal (22) aus einem Metall oder einem Kunststoff besteht oder ein Metall oder einen Kunststoff umfasst.

5. 1D-Ultraschallwandler-Einheit (10) nach einem der Ansprüche 1 bis 4, **dadurch gekennzeichnet, dass** jedes Ultraschallwandler (12) zwischen der Schallauskoppelschicht (20) und dem Wandlergehäuse (22) eine Schallentkopplungsschicht aufweist.

6. 1D-Ultraschallwandler-Einheit (10) nach einem der Ansprüche 1 bis 5, **dadurch gekennzeichnet, dass** die Steuereinheit vollständig oder teilweise in dem Gehäuse (14) angeordnet ist.

7. 1D-Ultraschallwandler-Einheit (10) nach einem der Ansprüche 1 bis 6, **dadurch gekennzeichnet, dass** das Gehäuse (14) der 1D-Ultraschallwandler-Einheit (10) mindestens der IP 40 Schutzart entsprechend ausgebildet ist.

8. 1D-Ultraschallwandler-Einheit (10) nach einem der Ansprüche 1 bis 7, **dadurch gekennzeichnet, dass** die Kommunikationsschnittstelle zur drahtlose Datenübermittlung ausgebildet ist.

## Claims

1. 1D ultrasonic transducer unit (10) for area monitoring, comprising a housing (14), at least three ultrasonic transducers (12) and a control unit, wherein
- the control unit is configured for individually activating each ultrasonic transducer (12),
- the housing comprises a communications interface,
- each ultrasonic transducer (12) comprises a respective transducer housing (18), a piezoelectric body (18) arranged in the transducer housing (18) and a sound decoupling layer (20), which is arranged at an open end of the transducer housing (18), for decoupling in a gaseous medium, the transducer being arranged at a fixed position in the housing (14),
- each ultrasonic transducer (12) is configured for the purpose of radiating and/or receiving a sound wave with a corresponding working frequency,
- the working frequency of the sound waves lies in a range of 20 kHz to 400 kHz,
- each two ultrasonic transducers (12) directly adjacent to one another have in the housing (14) a spacing (A1) from sound decoupling layer (20) centre to sound decoupling layer (20) centre of at most 10 centimetres or at most 5 centimetres or at most 2 centimetres,
- the 1D ultrasonic transducer unit (10) has one sound channel (22) per ultrasonic transducer (12),
- each sound channel (22) has an entry opening (24) and an exit opening (26),
- exactly one of the entry openings (24) is associated with each sound decoupling layer (20),
- the exit openings are arranged along a straight line,
- the exit openings are each arranged in a wall of the housing or the sound channels penetrate the wall of the housing,
- a spacing (A2) from the centre of one of the exit openings (26) to the centre of a directly adjacent exit opening (26) corresponds with at most the wavelength in the gaseous medium or at most half the wavelength of the gaseous medium,
- wherein the spacing (A2) between two directly adjacent exit openings (26) is smaller each time than the spacing (A1) between ultrasonic transducers (12) associated with the corresponding entry openings (24),
- a quotient of a surface area of the exit opening (26) to a surface area of the entry opening (24) has a value between 0.30 and 1.2 and
- each sound channel (22) has at least a length corresponding with the diameter of the entry opening (24),
**characterised in that**
- the housing (14) has fastening means (11) for fastening to a surface,
- the control unit is arranged at least partly in the housing (14),
- the housing has a movable cover device (32), wherein the cover device (32) is configured to close the exit openings (26) of all sound channels (22),
- the exit openings (26) of all sound channels (36) lie in a curved area (F1).

2. 1D ultrasonic transducer unit (10) according to claim 1, **characterised in that** the quotient of the surface area of the exit opening (26) to the surface area of the entry opening (24) has a value between 0.5 and 1.5 or between 0.9 and 1.1.

3. 1D ultrasonic transducer unit (10) according to one of claims 1 and 2, **characterised in that** each sound channel (22) has a length (L1) from the sound decoupling layer (20) of each ultrasonic transducer (12) to the exit opening (26) of the associated sound channel (22) and the length (L1) is an integral multiple of an eighth of the wavelength of the sound frequency or an integral multiple of half the wavelength of the sound frequency.

4. 1D ultrasonic transducer unit (10) according to any one of claims 1 to 3, **characterised in that** each sound channel (22) consists of a metal or a plastic or comprises a metal or a plastic.

5. 1D ultrasonic transducer unit (10) according to any one of claims 1 to 4, **characterised in that** each ultrasonic transducer (12) has a sound uncoupling layer (20) between the sound decoupling layer (20) and the transducer housing (22).

6. 1D ultrasonic transducer unit (10) according to any one of claims 1 to 5, **characterised in that** the control unit is arranged entirely or partly in the housing (14).

7. 1D ultrasonic transducer unit (10) according to any one of claims 1 to 6, **characterised in that** the housing (14) of the 1D ultrasonic transducer unit (10) is constructed in correspondence with at least the IP 40 protection class.

8. 1D ultrasonic transducer unit (10) according to any one of claims 1 to 7, **characterised in that** the communications interface is constructed for wire-free data transmission.

## Revendications

1. Unité à transducteurs à ultrasons 1D (10) pour la surveillance de zone, comprenant un boîtier (14), au moins trois transducteurs à ultrasons (12) et une unité de commande, dans laquelle
- l'unité de commande est conçue pour commander chaque transducteur à ultrasons (12) individuellement,
- le boîtier comporte une interface de communication,
- chaque transducteur à ultrasons (12) comporte un boîtier de transducteur (18), un corps piézoélectrique (18) disposé dans le boîtier de transducteur (18) et une couche de découplage sonore (20) disposée à une extrémité ouverte du boîtier de transducteur (18) pour le découplage dans un milieu gazeux, et est agencé à un emplacement fixe dans le boîtier (14),
- chaque transducteur à ultrasons (12) est conçu pour émettre et/ou pour recevoir une onde sonore avec une fréquence de fonctionnement appropriée,
- la fréquence de fonctionnement des ondes sonores se trouve sur une plage de 20 kHz à 400 kHz,
- deux transducteurs à ultrasons (12) immédiatement adjacents entre eux dans un boîtier (14) présentent une distance de 10 cm maximum ou 5 cm maximum ou 2 cm maximum du milieu de la couche de découplage sonore (20) au milieu de la couche de découplage sonore (20),
- l'unité à transducteurs à ultrasons 1D (10) comporte un canal acoustique (22) par transducteur à ultrasons (12),
- chaque canal acoustique (22) comporte une ouverture d'entrée (24) et une ouverture de sortie (26),
- à chaque couche de découplage sonore (20) est associée exactement une des ouvertures d'entrée (24),
- les ouvertures de sortie sont disposées le long d'une ligne droite,
- les ouvertures de sortie sont disposées chacune dans une paroi du boîtier ou les canaux acoustiques traversent la paroi du boîtier,
- une distance (A2) du milieu d'une des ouvertures de sortie (26) au milieu d'une ouverture de sortie (26) immédiatement adjacente correspond au maximum à la longueur d'onde dans le milieu gazeux ou au maximum à la moitié de la longueur d'onde dans le milieu gazeux,
- la distance (A2) entre deux ouvertures de sortie (26) immédiatement adjacentes est inférieure à la distance (A1) entre les ouvertures d'entrée (24) correspondantes des transducteurs à ultrasons (12) associés,
- un quotient d'une superficie de l'ouverture de sortie (26) sur une superficie de l'ouverture d'entrée (24) présente une valeur de 0,30 à 1,2 et
- chaque canal acoustique (22) possède au moins une longueur correspondant au diamètre de l'ouverture d'entrée (24),
**caractérisée en ce que**
- le boîtier (14) présente des moyens de fixation (11) pour le fixer à une surface,
- l'unité de commande est au moins partiellement disposée dans le boîtier (14),
- le boîtier comporte un dispositif de couverture (32) mobile, le dispositif de couverture (32) étant conçu pour obturer les ouvertures de sortie (26) de tous les canaux acoustiques (22) et
- les ouvertures de sortie (26) de tous les canaux acoustiques (36) se trouvent dans une surface courbe (F1).

2. Unité à transducteurs à ultrasons 1D (10) selon la revendication 1, **caractérisée en ce que** le quotient de la superficie de l'ouverture de sortie (26) sur la superficie de l'ouverture d'entrée (24) présente une valeur de 0,5 à 1,5 ou de 0,9 à 1,1.

3. Unité à transducteurs à ultrasons 1D (10) selon une des revendications 1 ou 2, **caractérisée en ce que** chaque canal acoustique (22) possède une longueur (L1) de la couche de découplage sonore (20) de chaque transducteur à ultrasons (12) à l'ouverture de sortie (26) du canal acoustique (22) associé et que la longueur (L1) est égale à un multiple entier d'un huitième de la longueur d'onde de la fréquence sonore ou à un multiple entier de la moitié de la longueur d'onde de la fréquence sonore.

4. Unité à transducteurs à ultrasons 1D (10) selon une des revendications 1 ou 3, **caractérisée en ce que** chaque canal acoustique (22) est fait de métal ou de matière plastique ou comprend un métal ou une matière plastique.

5. Unité à transducteurs à ultrasons 1D (10) selon une des revendications 1 ou 4, **caractérisée en ce que** chaque transducteur à ultrasons (12) présente une couche de découplage sonore entre la couche de découplage sonore (20) et le boîtier de transducteur (22).

6. Unité à transducteurs à ultrasons 1D (10) selon une des revendications 1 ou 5, **caractérisée en ce que** l'unité de commande est entièrement ou partiellement disposée dans le boîtier (14).

7. Unité à transducteurs à ultrasons 1D (10) selon une des revendications 1 ou 6, **caractérisée en ce que** le boîtier (14) de l'unité de transducteurs à ultrasons 1D (10) est conçue au moins selon l'indice de protection IP 40.

8. Unité à transducteurs à ultrasons 1D (10) selon une des revendications 1 ou 7, **caractérisée en ce que** l'interface de communication est conçue pour la transmission sans fil des données.
